(19) Europäisches Patentamt / European Patent Office / Office européen des brevets

(11) **EP 3 403 023 B1**

(12) **FASCICULE DE BREVET EUROPEEN**

(45) Date de publication et mention
de la délivrance du brevet:
**05.03.2025   Bulletin 2025/10**

(21) Numéro de dépôt: **17712191.0**

(22) Date de dépôt: **12.01.2017**

(51) Classification Internationale des Brevets (IPC):
**F21V 8/00** *(2006.01)*      **G02B 27/01** *(2006.01)*

(52) Classification Coopérative des Brevets (CPC):
**G02B 27/0172; G02B 6/0076; G02B 2027/0118;
G02B 2027/0123; G02B 2027/0125;
G02B 2027/015; G02B 2027/0152**

(86) Numéro de dépôt international:
**PCT/FR2017/050073**

(87) Numéro de publication internationale:
**WO 2017/121967 (20.07.2017 Gazette 2017/29)**

(54) **GUIDE OPTIQUE AMÉLIORÉ ET SYSTÈME OPTIQUE**

VERBESSERTER LICHTLEITER UND OPTISCHES SYSTEM

IMPROVED OPTICAL GUIDE AND OPTICAL SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.01.2016   FR 1650351**
**15.11.2016   FR 1661067**

(43) Date de publication de la demande:
**21.11.2018   Bulletin 2018/47**

(73) Titulaires:
• **Université de Strasbourg**
  **67081 Strasbourg Cedex (FR)**
• **Centre National de la Recherche Scientifique
  (CNRS)**
  **75794 Paris Cedex 16 (FR)**
• **Institut National Des Sciences
  Appliquees**
  **67000 Strasbourg (FR)**

(72) Inventeurs:
• **YANG, Jianming**
  **67400 ILLKIRCH GRAFFENSTADEN (FR)**
• **TWARDOWSKI, Patrice**
  **67100 STRASBOURG (FR)**
• **FONTAINE, Joël**
  **67200 STRASBOURG (FR)**

(74) Mandataire: **Merckling, Norbert**
**Cabinet Laurent et Charras**
**1A Place Boecler**
**CS 10063**
**67024 Strasbourg Cedex (FR)**

(56) Documents cités:
| | |
|---|---|
| EP-A1- 3 292 432 | JP-A- 2004 158 336 |
| US-A1- 2011 175 799 | US-A1- 2013 070 338 |
| US-A1- 2013 215 516 | US-A1- 2013 308 339 |
| US-A1- 2014 140 653 | |

• YANG JIANMING ET AL: "Polychromatic see-through near-eye display design with two waveguides and a large field-of-view", SPIE - INTERNATIONAL SOCIETY FOR OPTICAL ENGINEERING. PROCEEDINGS, S P I E - INTERNATIONAL SOCIETY FOR OPTICAL ENGINEERING, US, vol. 9896, 29 April 2016 (2016-04-29), pages 989605 - 989605, XP060071032, ISSN: 0277-786X, ISBN: 978-1-5106-0753-8, DOI: 10.1117/12.2227383

• JIANMING YANG ET AL: "Design of a large field-of-view see-through near to eye display with two geometrical waveguides", OPTICS LETTERS, vol. 41, no. 23, 25 October 2016 (2016-10-25), pages 5426, XP055383187, ISSN: 0146-9592, DOI: 10.1364/OL.41.005426

• JIAN HAN ET AL: "Portable waveguide display system with a large field of view by integrating freeform elements and volume holograms", OPTICS EXPRESS, vol. 23, no. 3, 9 February 2015 (2015-02-09), pages 3534, XP055302668, ISSN: 2161-2072, DOI: 10.1364/OE.23.003534

• ANONYMOUS: "OSA | Early Posting", 12 August 2015 (2015-08-12), XP055386685, Retrieved from the Internet <URL:https://web.archive.org/web/20150812135425/https://www.osapublishing.org/ol/earlyposting/faq.cfm> [retrieved on 20170629]

## Description

### Domaine technique

La présente invention se rapporte au domaine technique général des dispositifs et/ou systèmes optiques utilisés en réalité virtuelle ou augmentée. L'invention se rapporte notamment au domaine médical, au domaine éducatif et culturel, au domaine des jeux. L'invention trouve son application notamment dans des systèmes de navigation, de sécurité, de transport ou de prototypage dans l'industrie.

Le système optique conforme à l'invention fonctionne avec toute lumière polychromatique ou monochromatique, dans le domaine du visible.

La présente invention concerne plus particulièrement un guide optique utilisé dans des appareillages, accessoires ou autres instruments présentant un affichage près de l'œil, appelé également NED (Near Eye Display), du genre casques ou lunettes spéciales.

### Etat de la technique

Les dispositifs d'affichage près de l'œil connus, notamment ceux présentant une propagation des rayons lumineux à l'air libre, présentent des inconvénients non négligeables. En effet, dans ces dispositifs, les miroirs utilisés présentent des dimensions importantes contribuant ainsi à augmenter l'encombrement desdits dispositifs. Le poids de ces dispositifs est également un inconvénient. De tels dispositifs sont notamment décrits dans les documents US 2012/0212400 A1 ou FR 2 941 786 A1.

On connait également par l'intermédiaire du document FR 2 983 976 un guide optique à éléments de guidage superposés. Les éléments de guidage, de forme lamellaire, sont jointifs à l'une de leur face et séparés par un revêtement semi-réfléchissant sur au moins une partie de leur longueur. Un positionnement précis du revêtement semi-réfléchissant rend la fabrication de tels guides optiques complexe et coûteuse. En outre, l'assemblage jointif des deux éléments de guidage doit être dépourvu d'irrégularités dimensionnelles ou de poches à air pour assurer le parfait fonctionnement du guide optique. Le document US 2014/140653 A1 divulgue un dispositif d'affichage près de l'oeil avec deux guides optiques.

Il est par ailleurs difficile de maîtriser les pertes que subissent les signaux optiques se propageant à travers de tels guides optiques.

Les systèmes optiques connus, notamment ceux comportant de tels guides optiques, procurent souvent un champ de vision restreint dans au moins une direction, typiquement un champ de vision de 26° (direction horizontale) x 20° (direction verticale). Ceci est très souvent un inconvénient majeur dans leurs domaines d'utilisation.

**On connait également le document** JP 2004 158336**, lequel décrit un guide optique pour fournir une source de lumière surfacique permettant un mélange de couleurs et de luminosités notamment pour réaliser une source à haute luminosité, mais ne permet pas de conserver les champs optiques lors de la transmission de la lumière.**

### Exposé de l'invention

L'objet de la présente invention vise par conséquent à pallier les inconvénients de l'art antérieur et de fournir un nouveau guide optique permettant d'élargir substantiellement le champ de vision.

Un autre objet de la présente invention vise à fournir un nouveau guide optique plus compact et moins lourd.

Un autre objet de la présente invention vise à augmenter les dimensions de l' « eyebox ». La zone appelée appelée « eyebox » est par définition la zone de déplacement de l'œil de l'utilisateur dans laquelle on garantit une détection acceptable. Les dimensions de cette zone, appelée « eyebox » varient selon les exemples de réalisation.

Les objets assignés à l'invention sont atteints à l'aide d'un guide optique pour dispositif d'affichage près de l'œil selon la revendication 1.

Selon un exemple de réalisation préférentiel du guide optique conforme à l'invention, l'espacement entre les éléments de guide présente une épaisseur e comprise entre 0,1 mm et 0,2 mm.

Selon un exemple de réalisation du guide optique conforme à l'invention, le premier élément de guide présente la zone d'entrée à sa première extrémité longitudinale libre, sous forme d'une face inclinée.

Selon un exemple de réalisation du guide optique conforme à l'invention, la zone de sortie est pourvue d'un système d'extraction de lumière comportant au moins un miroir d'extraction.

Selon un autre exemple de réalisation préférentiel du guide optique conforme à l'invention, la zone de sortie est pourvue d'un système d'extraction de lumière comportant une succession de plusieurs miroirs d'extraction semi-réfléchissants, constituant un guide d'extraction.

Selon un exemple de réalisation préférentiel du guide optique conforme à l'invention, le second élément de guide présente une épaisseur e2 reliée à l'épaisseur e1 du premier élément de guide avec la relation : $e2 = e1 \times (\tan\beta / \tan\alpha)$, avec $\alpha$ et $\beta$ respectivement les incidences minimale et maximale des faisceaux de lumière injectés dans le premier élément de guide.

Selon un exemple de réalisation préférentiel du guide optique conforme à l'invention, le premier élément de guide et le second élément du guide présentent une longueur comprise entre 40 mm et 50 mm, la largeur desdits éléments de guide étant identique et comprise entre 35 mm et 45 mm.

Selon un exemple de réalisation conforme à l'invention, le guide optique présente une épaisseur e3 totale comprise entre 4 mm et 7 mm.

Selon un exemple de réalisation du guide optique conforme à l'invention, les éléments de guide sont réalisés avec le même matériau constitutif, du genre PMMA.

Selon l'invention, l'organe optique de réflexion est un miroir cylindrique recouvrant la surface cylindrique d'extrémité de la portion.

Les objets de l'invention sont également atteints à l'aide d'un système optique **d'affichage près de l'œil comprenant :**

- **un guide optique** conformant à la revendication 1, et
- **un système d'injection de lumière pour injecter la lumière dans ledit guide optique , <u>caractérisé en ce que</u> le système d'injection comporte un micro-affichage pour fournir des sources ponctuelles de lumière, ledit système d'injection permettant d'obtenir dans le guide des faisceaux de lumière parallèles selon une direction donnée y et convergents dans un plan xz orthogonal à ladite direction y.**

Selon un exemple de réalisation du système optique conforme à l'invention, le système d'injection comporte des organes optimisés pour focaliser, dans un plan zx, orthogonal au plan yx, chaque faisceau de lumière sur une surface focale courbe, laquelle se situe sensiblement à la distance focale du miroir cylindrique.

Selon un autre exemple de réalisation, le système d'injection de lumière comprend deux lentilles présentant trois surfaces optiques de forme libre et un miroir plan.

Selon un autre exemple de réalisation, le système d'injection de lumière comprend deux miroirs de forme libre et une lentille présentant au moins une surface optique de forme libre ainsi qu'une lentille sphérique.

Selon un autre exemple de réalisation, le système d'injection de lumière comprend un prisme de forme libre en une seule pièce présentant quatre surfaces optiques de forme libre dont deux travaillent en transmission, tandis que les deux autres travaillent en réflexion et une lentille présentant une surface optique de forme libre.

Les objets assignés à l'invention sont également atteints à l'aide d'un système optique d'affichage près de l'œil comprenant un guide optique décrit ci-dessus et un système d'injection de lumière, lequel comprend un micro-affichage pour fournir des sources ponctuelles de lumière, ledit système d'injection permettant d'obtenir dans le guide des faisceaux de lumière parallèles, trois lentilles asphériques agencées pour présenter six surfaces optiques asphériques et une lentille sphérique.

Selon un exemple de réalisation, les lentilles asphériques, présentant une symétrie de révolution, sont réalisées par au moins l'une d'entre-elles avec un matériau constitutif différent de celui des autres lentilles.

Selon un autre exemple de réalisation, le système d'injection de lumière, lequel comprend un micro-affichage pour fournir des sources ponctuelles de lumière, ledit système d'injection permettant d'obtenir dans le guide, des faisceaux de lumière parallèles et huit lentilles sphériques.

Les lentilles sphériques, présentant une symétrie de révolution, sont avantageusement réalisées en verres optiques ou en une association de verres optiques et de plastiques/polymères.

Dans ces deux derniers exemples de réalisation, le système optique conforme à l'invention présente l'avantage de fonctionner avec des ondes planes dans le premier et dans le second élément de guide. Le système d'injection de lumière peut donc présenter une symétrie de révolution. En outre, l'injection d'ondes planes dans le guide optique permet de simplifier le système optique et de réduire son coût.

Le système optique conforme à l'invention est avantageusement intégré à un casque de réalité virtuelle ou augmentée.

Le dispositif de guide optique conforme à l'invention présente également l'énorme avantage d'être très compact et léger. Pour une compacité similaire à celle d'un guide optique connu, le champ de vision est augmenté significativement.

Un avantage remarquable du guide optique conforme à l'invention réside dans l'obtention d'un champ de vision élargi. En effet, le champ de vision maximal obtenu, exprimé dans l'air, est au moins de 20° et jusqu'à 45° en direction horizontale, au moins de 40° et jusqu'à 60° en direction verticale, augmentant ainsi de façon substantielle et inattendue le champ de vision, notamment dans la direction verticale.

Le système optique conforme à l'invention permet également d'augmenter la zone de déplacement de l'œil de l'utilisateur et garantir ainsi une détection acceptable. Cette zone, appelée « eyebox » varie selon les exemples de réalisation conformes à l'invention de 15 mm (H : horizontalement) x 4 mm (V : verticalement), jusqu'à 15 mm (H) x 12 mm (V) en utilisant un guide d'extraction de lumière.

**Brève description des figures**

D'autres caractéristiques et avantages de l'invention apparaîtront à la lecture de la description détaillée qui va suivre, description faite en référence aux dessins annexés donnés à titre d'exemples illustratifs et non limitatifs, dans lesquels :

- la figure 1 est une illustration schématique et générale et simplifiée d'une famille de guides optiques connue à laquelle se rapporte l'invention,
- les figures 1a et 1b illustrent schématiquement deux exemples d'agencement entre un guide optique conforme à l'invention et un système d'injection de lumière,

- la figure 2a représente un exemple de réalisation, selon une vue longitudinale, d'un exemple de réalisation d'un guide optique conforme à l'invention,
- la figure 2b est une représentation selon une vue de dessus du guide optique de la figure 2a,
- la figure 3 est une représentation selon une vue en perspective du guide optique de la figure 2a ou 2b,
- les figures 4a, 4b et 4c illustrent schématiquement des exemples de propagations de faisceaux de lumière dans un premier exemple de réalisation d'un guide optique conforme à l'invention, respectivement selon un plan yx, zx et zy,
- les figures 5a, 5b et 5c illustrent schématiquement dans un plan zx, des exemples de propagations de faisceaux de lumière dans un guide optique conforme à l'invention, à partir de différentes sources ponctuelles,
- la figure 6, illustre schématiquement, avec un agrandissement de la figure 2a, les angles d'incidence minimal et maximal d'un faisceau de lumière se propageant dans un guide optique conforme à l'invention,
- les figures 7, 8 et 9 illustrent schématiquement trois modes de réalisation d'un système optique conforme à l'invention comportant chacun un exemple de réalisation d'un système d'injection de lumière spécifique,
- la figure 10 est une représentation partielle d'un autre exemple de réalisation d'un guide optique qui ne fait pas partie de l'invention,
- la figure 11 illustre un détail agrandi de la figure 10,
- les figures 12 et 13 illustrent schématiquement deux autres modes de réalisation d'un système optique comportant chacun un autre exemple de réalisation d'un système d'injection de lumière et un guide optique de la figure 10,
- les figures 14a, 14b et 14c illustrent schématiquement dans un plan zx, des exemples de propagation de faisceaux de lumière dans un guide optique illustré à la figure 10, et
- la figure 15 est une illustration d'un agrandissement d'un exemple de système ou guide d'extraction de lumière agencé dans un guide optique conforme à l'invention.

## Exposé détaillé de l'invention

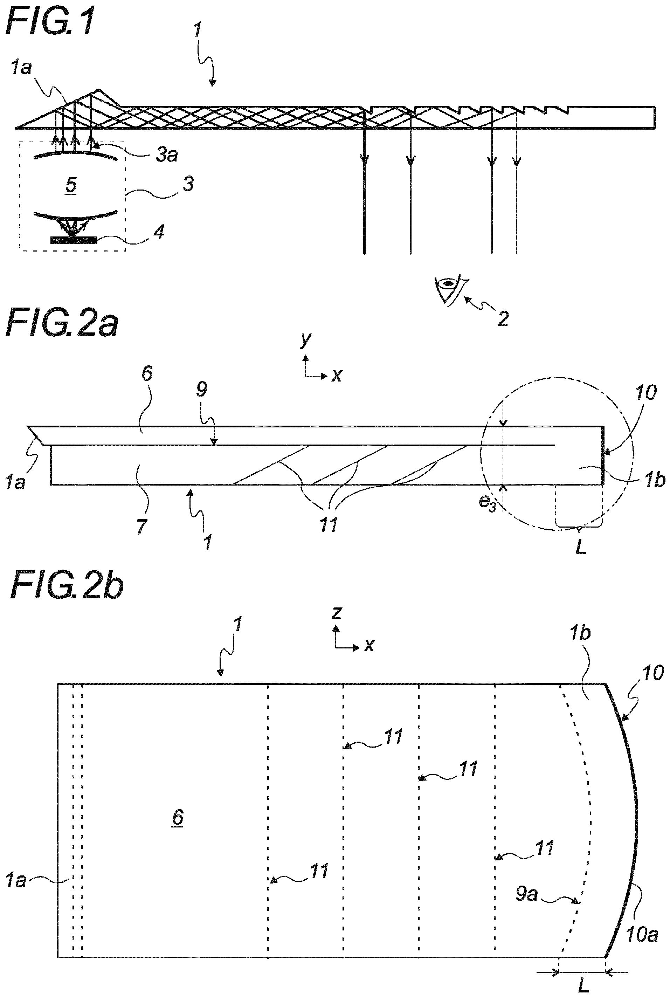

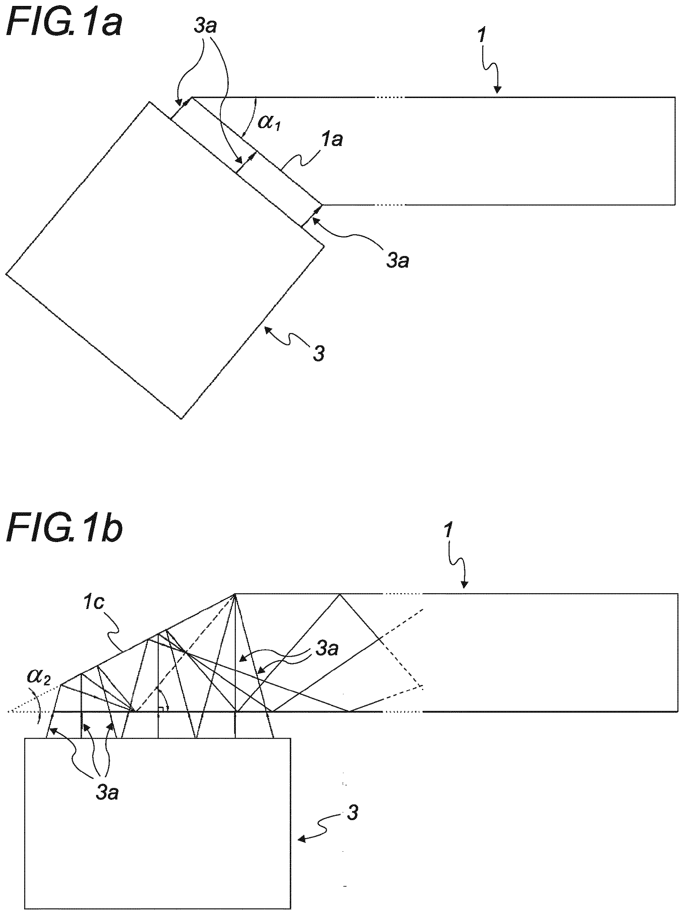

La figure 1 illustre très schématiquement le principe général de la famille des guides optiques au sein de laquelle est développé un guide optique 1 conforme à l'invention.

Ces systèmes comprennent donc un guide optique 1 transportant un faisceau de lumière vers un œil 2 d'un utilisateur.

Le système optique comprend également un système d'injection 3 de lumière, permettant d'injecter des faisceaux 3a de lumière dans le guide optique 1 par l'intermédiaire d'une zone d'entrée 1a.

Le système d'injection 3 comprend un micro-affichage 4 sur lequel se situent des sources ponctuelles de lumière générant les faisceaux de lumière ainsi que des organes de collimation 5 permettant d'injecter plusieurs faisceaux 3a de lumière parallèles dans le guide optique 1.

Dans l'exemple de réalisation illustré à la figure 1a, la zone d'entrée 1a est une face inclinée du guide optique 1. L'injection de lumière par le système d'injection 3 est effectuée en choisissant un angle adéquat pour l'inclinaison de cette face inclinée.

Dans l'exemple de réalisation illustré à la figure 1b, le système d'injection 3 est perpendiculaire à l'extension longitudinale du guide optique 1. Le couplage d'entrée dans le guide optique est obtenu par l'intermédiaire d'un miroir de couplage 1c constitué par une face inclinée et métallisée du guide optique 1. A titre d'exemple, les angles d'inclinaison $\alpha1$ et $\alpha2$ valent respectivement 45° et 24° pour un matériau du genre PMMA. Les faisceaux de lumières injectés dans le guide optique 1 se propagent par réflexion interne totale.

L'efficacité du couplage optique est identique pour les deux exemples de réalisation des figures 1a et 1b. Seules des contraintes d'encombrement conduiront à utiliser l'une ou l'autre de ces solutions techniques.

La figure 2a représente un exemple de réalisation, selon une vue longitudinale de profil, du guide optique 1 conforme à l'invention. La figure 2a est une représentation dans un plan xy d'un espace xyz et la figure 2b est une représentation selon une vue de dessus dudit guide optique 1 dans un plan zx.

Le guide optique 1 comprend un premier élément de guide 6 disposé au-dessus d'un second élément de guide 7. Les éléments de guide 6 et 7 présentent avantageusement une forme lamellaire monobloc et leurs faces respectives en regard l'une de l'autre ne sont pas jointives sur une portion de leur longueur. Un espacement 9, de faible épaisseur, entre les éléments de guide 6 et 7 permet ainsi de réaliser une interface avec une fine couche d'air.

Les éléments de guide 6 et 7 sont reliés entre eux sur une portion complémentaire 1b de leur longueur L par l'intermédiaire d'une continuité de matière de façon à constituer une forme d'une seule pièce ou monobloc du guide optique 1.

Le guide optique 1 comporte également à l'une de ses extrémités longitudinales un organe de réflexion optique. Ce dernier est un miroir cylindrique 10a.

Le miroir cylindrique 10a réalise ainsi avec la portion complémentaire L, le couplage optique entre le premier élément de guide 6 et le second élément de guide 7. Les faisceaux de lumière se propagent ainsi d'abord dans le premier élément de guide 6 avant de se propager dans le second élément de guide 7 dans un sens opposé. Mais en aucun cas, une partie des rayons de lumière ne se propage simultanément dans les deux éléments de guides 6 et 7 et selon le même sens de propagation. Les faisceaux de lumière traversant la portion 1b complémentaire et se réfléchissant sur une face interne du miroir cylindrique 10a restent donc confinés dans la matière constitutive des éléments de guide 6 et 7 et ne traversent aucune interface ou discontinuité de matière.

L'élément de guide 6 comporte à son extrémité longitudinale opposée à celle comportant le miroir cylindrique 10, la zone d'entrée 1a. Cette dernière est par exemple réalisée par une simple face inclinée s'étendant orthogonalement au plan xy.

L'élément de guide 7 intègre également dans une zone d'extraction, comportant par exemple un miroir d'extraction 11. Selon l'exemple de réalisation illustré à la figure 2b, la zone d'extraction comporte une cascade de trois miroirs d'extraction 11 semi-réfléchissants, permettant de diriger les faisceaux de lumière vers l'œil 2.

L'espacement 9, s'étendant jusqu'à une limite correspondant au bord interne 9a de la zone de de continuité de matière des éléments de guide 6 et 7, présente avantageusement une épaisseur e suffisante pour éviter un couplage optique direct entre lesdits éléments de guide 6 et 7. La propagation de la lumière se fait donc de façon indépendante dans chaque élément de guide 6 et 7. L'épaisseur e de l'espacement 9 est cependant suffisante pour éviter une pénétration de faisceaux de lumière réfléchis dans ledit espacement 9 et éviter ainsi les pertes de signal.

L'épaisseur e doit donc être aussi faible que possible tout en évitant l'apparition d'un couplage optique entre les éléments de guide 6 et 7. L'épaisseur est avantageusement comprise entre 0,1 mm et 0,2 mm.

Cette extrémité du guide optique 1 illustrée par exemple à la figure 2b, montre l'agencement du miroir cylindrique 10a, avec sa face interne en contact avec l'extrémité longitudinale commune des éléments de guide 6 et 7.

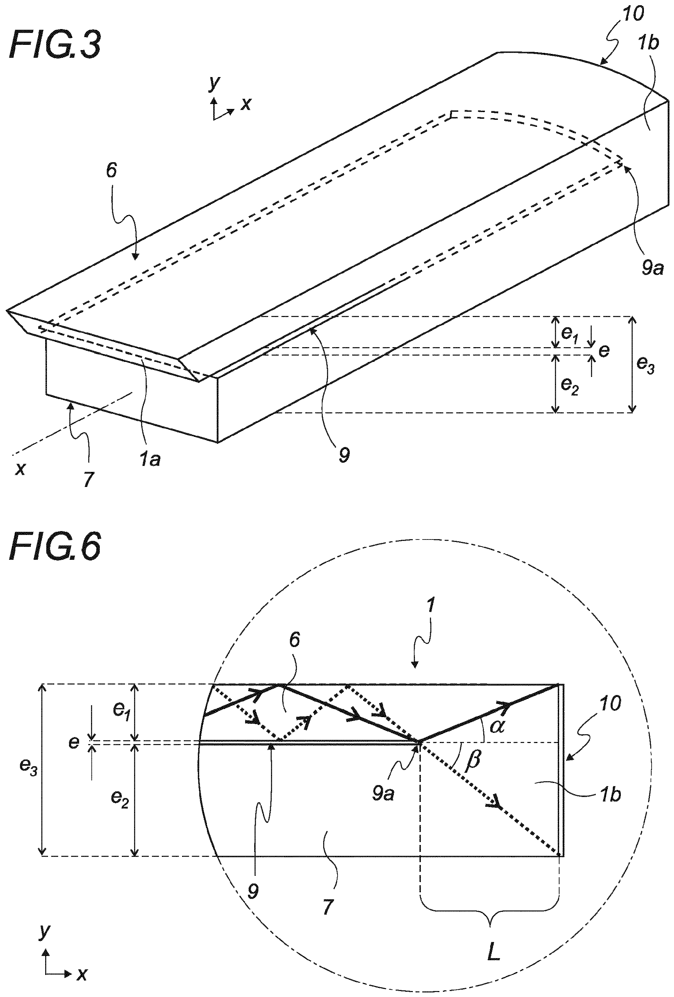

La figure 3 est une représentation en perspective du guide optique de la figure 2a ou 2b.

Les éléments de guide 6 et 7 présentent avantageusement une forme lamellaire, sensiblement de même longueur et de même largeur.

Selon un exemple de réalisation préférentiel, l'épaisseur e2 du second élément de guide 7 est sensiblement égale au double de l'épaisseur e1 du premier élément de guide 6.

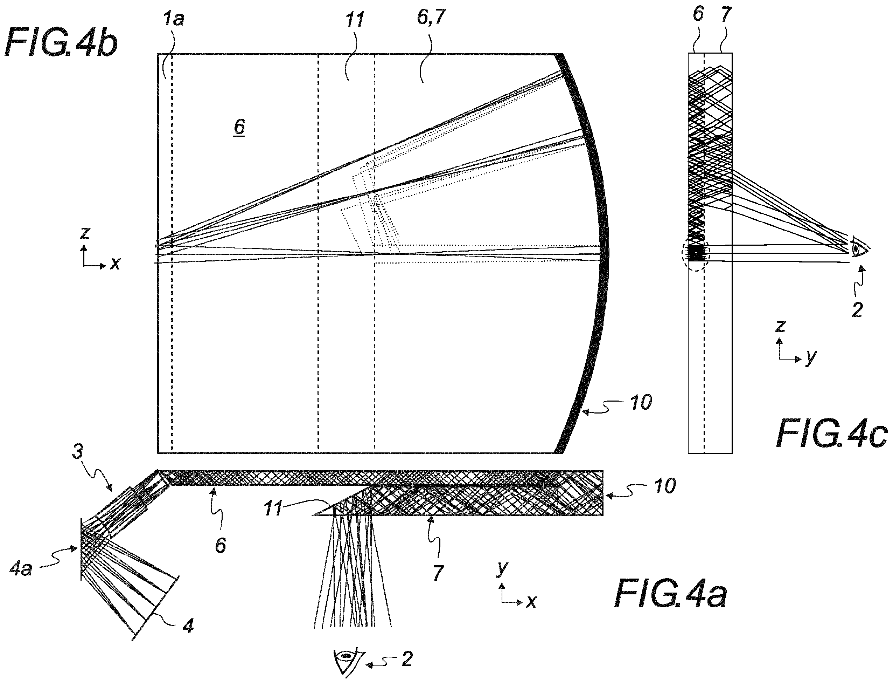

Les figures 4a, 4b et 4c illustrent schématiquement des exemples de propagations de faisceaux de lumière dans le guide optique 1 conforme à l'invention, respectivement selon un plan yx, zx et zy.

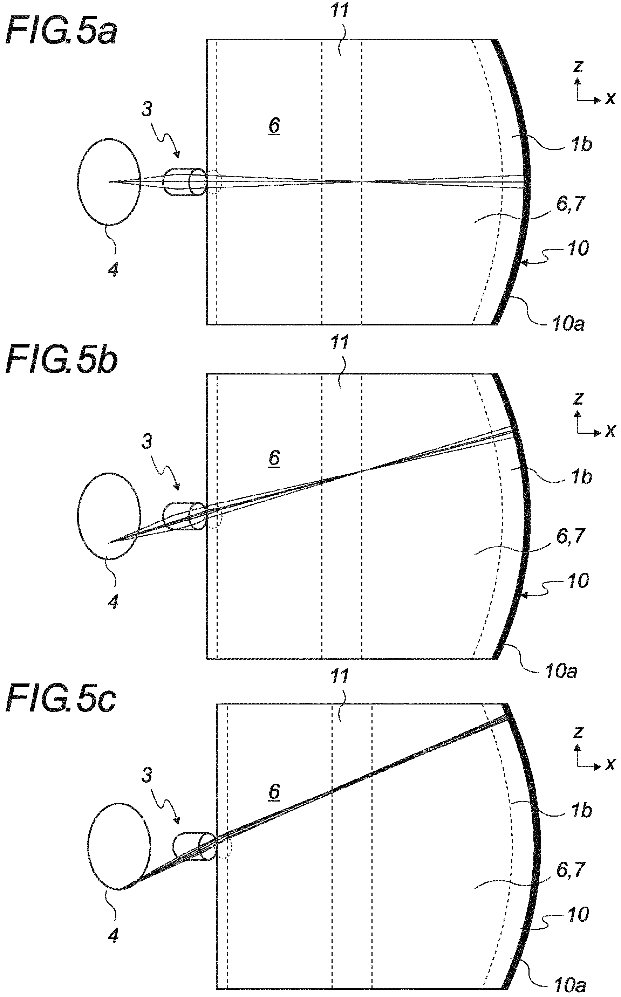

Les figures 5a, 5b et 5c illustrent schématiquement dans un plan zx, des exemples de propagations de faisceaux de lumière dans le guide optique 1 conforme à l'invention, à partir de différentes sources ponctuelles localisées sur le micro-affichage 4 associé à un miroir plan 4a incliné. La figure 5a illustre un faisceau de lumière s'étendant sensiblement selon l'axe x central. La figure 5b illustre un faisceau de lumière s'étendant suivant une direction intermédiaire et la figure 5c illustre un faisceau de lumière s'étendant suivant une direction extrême.

Le guide optique 1 est avantageusement intégré dans un système optique d'affichage près de l'œil, du genre casque ou lunettes de réalité virtuelle ou augmentée.

Un tel système optique d'affichage près de l'œil conforme à l'invention comprend outre le guide optique 1 décrit ci-dessus le système d'injection 3 de lumière pour injecter la lumière dans ledit guide optique 1. Le système d'injection 3 comporte le micro-affichage 4 pour fournir des sources ponctuelles. Le système d'injection 3 permet d'obtenir dans le guide 1 des faisceaux de lumière parallèles selon une direction donnée y et convergents dans le plan zx.

Le système d'injection 3 comporte à cet effet des organes optimisés, notamment du genre lentilles, pour focaliser, dans le plan zx, orthogonal au plan yx, chaque faisceau de lumière sur une surface focale courbe, approximativement sphérique. Cette surface focale est située à la distance focale du miroir cylindrique 10 pour le faisceau de lumière central ou proche de cette distance focale pour les autres faisceaux.

L'optimisation est obtenue par exemple par l'agencement de lentilles et l'usinage de formes particulières de type surface optique de forme libre. Ceci permet de s'assurer que les faisceaux de lumière sortant de l'élément de guide 7 sont complètement parallèles sous la forme d'ondes planes.

L'axe z correspond par conséquent à la direction verticale suivant laquelle le champ de vision est substantiellement agrandi conformément à l'invention.

La figure 6 illustre schématiquement, avec un agrandissement de la figure 2a, les angles d'incidence minimal $\alpha$ et maximal $\beta$ d'un faisceau de lumière se propageant dans un guide optique 1 conforme à l'invention. Ainsi, il est possible de déterminer la longueur L de la portion 1b d'extrémité commune des éléments de guide 6 et 7, notamment en fonction des épaisseurs e1 et e2 respectivement des éléments de guide 6 et 7. On peut ainsi calculer les valeurs minimales de la longueur L, ainsi que de l'épaisseur e2 du second élément de guide 7, en partant d'une épaisseur e1 du premier élément de guide 6.

Les éléments de calcul, donnés ci-après, supposent que le matériau constitutif des éléments de guide 6 et 7 et par conséquent de l'ensemble de guide optique 1 hormis le miroir cylindrique 10a, est le même. Pour un matériau donné, la valeur de la longueur L de la portion s'étendant entre le bord interne 9a et le miroir 10 est donnée par :

$$L = e1 \,/\, \tan\alpha$$

La valeur de la longueur L dépend par conséquent de l'angle d'incidence minimal $\alpha$. On utilise également la relation :

$$e2 = L \times \tan\beta$$

Cette condition détermine l'épaisseur e2 du second élément de guide 7 en fonction de la longueur L et de l'angle d'incidence maximal $\beta$. Il en résulte donc que :

$$e2 = (\tan\beta / \tan\alpha) \times e1$$

On obtient ainsi l'épaisseur e2 du second élément de guide 7 en fonction de l'épaisseur e1 du premier élément de guide 6.

Ainsi à titre d'exemple, avec e1 = 1,5 mm, un angle d'incidence minimal $\alpha$ égal à 28° et un angle d'incidence $\beta$ égal à 48° on obtient une épaisseur du second élément de guide 7 de e2 = 2,08 x e1 donc approximativement 3 mm et la longueur L égale à 2,82 mm, par exemple pour le matériau PMMA.

Selon un exemple de réalisation du guide optique 1 conforme à l'invention, le premier élément de guide 6 et le second élément du guide 7 présentent une longueur comprise entre 40 mm et 50 mm, la largeur desdits éléments de guide 6 et 7 étant identique et comprise entre 35 mm et 45 mm. Ces dimensions sont par exemple particulièrement indiquées pour une intégration dans des lunettes.

Selon un exemple de réalisation préférentiel conforme à l'invention, le guide optique présente une épaisseur e3 comprise entre 4 mm et 7 mm.

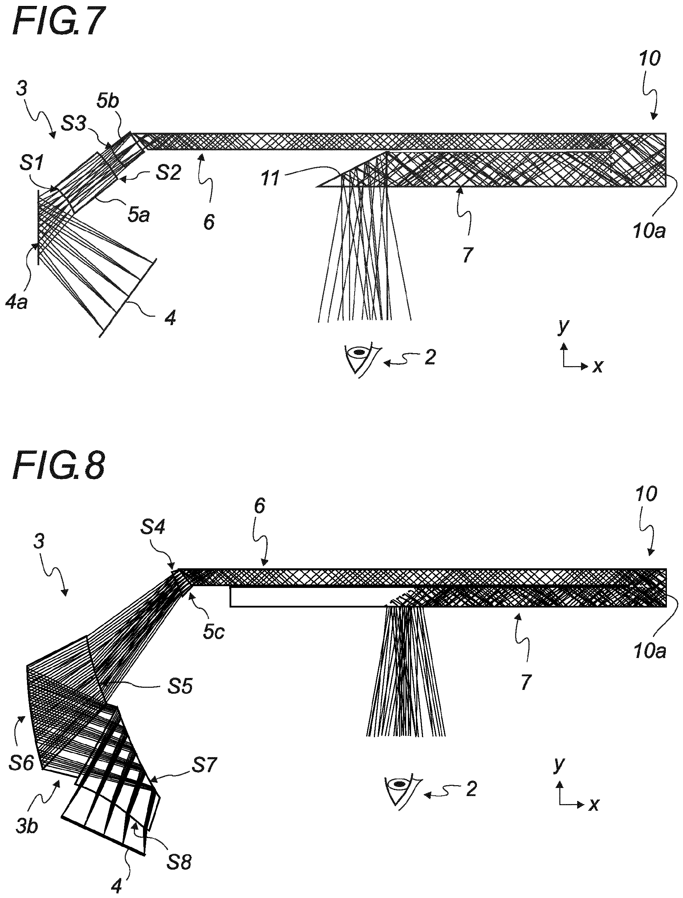

La figure 7 illustre schématiquement un mode de réalisation d'un système optique dans lequel le système d'injection de lumière 3 comporte deux lentilles 5a, 5b. Ces dernières présentent avantageusement trois surfaces optiques de forme libre S1, S2, S3 associées à un miroir plan 4a incliné.

La figure 8 illustre schématiquement un mode de réalisation d'un système optique dans lequel le système d'injection de lumière 3 comprend un prisme de forme libre 3b en une seule pièce. Le prisme de forme libre 3b présente d'une part quatre surfaces optiques de forme libre S5, S6, S7, S8, dont deux S5, S8 travaillent en transmission, tandis que les deux autres S7, S6 travaillent en réflexion et d'autre part, une lentille 5c présentant une surface optique de forme libre S4.

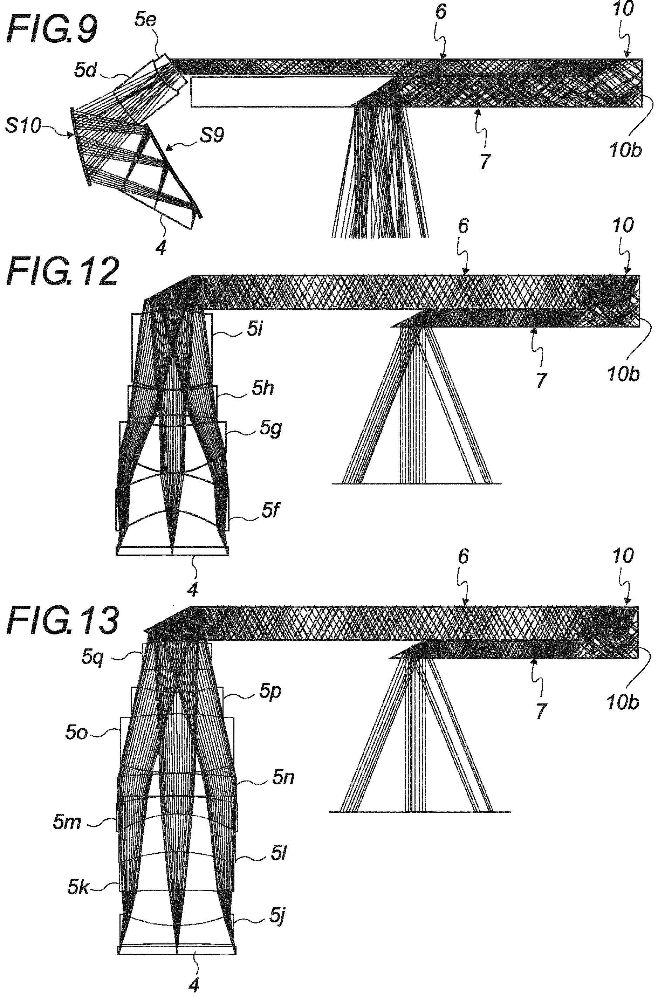

Dans un exemple de réalisation illustré à la figure 9, le système d'injection de lumière 3 comprend deux miroirs de forme libre S9 et S10 et une lentille 5d présentant une surface optique de forme libre ainsi qu'une lentille sphérique 5e. Cette dernière présente une ou deux faces sphériques. Avantageusement, la lentille sphérique 5e présente une face plane permettant de faciliter son positionnement par rapport au guide optique 1.

Les lentilles 5d et 5e sont fabriquées à l'aide de matériaux différents. L'un des matériaux est par exemple le verre optique et l'autre matériau est par exemple un plastique ou polymère. On obtient ainsi deux surfaces de forme libre fonctionnant en réflexion, au moins une surface à forme libre fonctionnant en transmission et une surface sphérique fonctionnant en transmission.

Dans un exemple de réalisation conforme à l'invention, la lentille 5d présente une surface de forme libre et une face sphérique laquelle est jointive avec la face sphérique de la lentille sphérique 5e. Cette dernière présente alors une seconde face plane.

Dans un autre exemple de réalisation conforme à l'invention, les lentilles 5d et 5e ne sont pas jointives. La lentille 5d présente alors de faces de forme libre et la lentille sphérique 5e présente une face sphérique et une face plane.

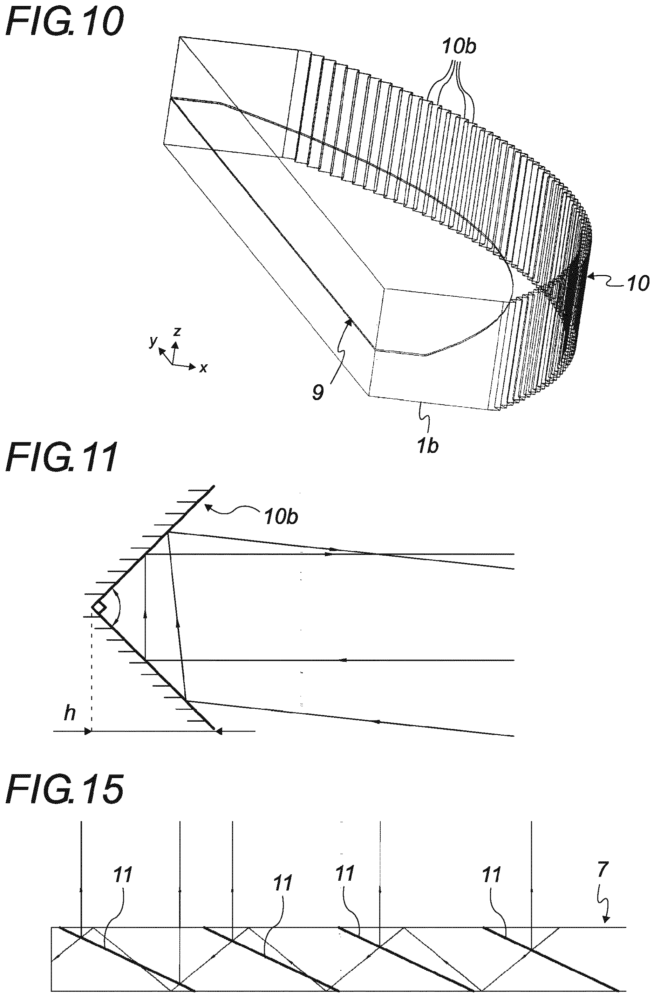

La figure 10 est une représentation partielle d'un autre exemple de réalisation d'un guide optique 1, utilisé dans un système optique qui ne fait pas partie de l'invention. Ce système optique comprend un système d'injection de lumière 3 dans lequel

le miroir cylindrique 10a est remplacé par des micro-réflecteurs en forme de dents de scie 10b. Ces dernières, illustrées plus en détails à la figure 11, présentent avantageusement une hauteur h comprise entre 0,2 mm et 1 mm et se répartissent selon un agencement cylindrique de 42,8 mm de rayon. Deux faces consécutives formant une telle dent de scie présente avantageusement un angle mutuel compris entre de 89,8° et 90,2° et de préférence égale à 90°.

L'organe optique de réflexion optique est donc constitué des micro-réflecteurs 10b agencés selon un profil cylindrique à l'extrémité libre de la portion 1b. Les micro-réflecteurs 10b en forme de dents de scie sont avantageusement métallisés et réalisés dans l'extrémité libre de forme cylindrique de la portion 1b, soit par moulage, soit par usinage.

Avec cette configuration de l'organe de réflexion optique schématisé aux figures 10 et 11, le système optique comprend un système d'injection 3 de lumière représenté par exemple à la figure 12 ou 13.

Dans l'exemple de réalisation illustré à la figure 12, le système d'injection de lumière 3, lequel comprend le micro-affichage 4 pour fournir des sources ponctuelles de lumière, comprend également trois lentilles asphériques 5f, 5g, 5i, agencées pour présenter six surfaces optiques asphériques et une lentille sphérique 5h laquelle présente au moins une surface sphérique.

Les lentilles asphériques 5f, 5g, 5i et la lentille sphérique 5h présentent une symétrie de révolution et sont réalisées pour au moins l'une d'entre-elles avec un matériau constitutif différent de celui des autres.

Dans l'exemple de réalisation illustré à la figure 13, le système d'injection de lumière 3, lequel comprend le micro-affichage 4 pour fournir des sources ponctuelles de lumière, comprend également huit lentilles sphériques 5j, 5k, 5l, 5m, 5n, 5o, 5p, 5q.

Les lentilles sphériques 5j, 5k, 5l, 5m, 5n, 5o, 5p, 5q, présentent donc une symétrie de révolution, sont réalisées en verres optiques ou en une association de verres optiques et de plastiques/polymères de manière à réaliser un ensemble dont au moins une lentille est réalisée avec un matériau constitutif différent de celui des autres lentilles.

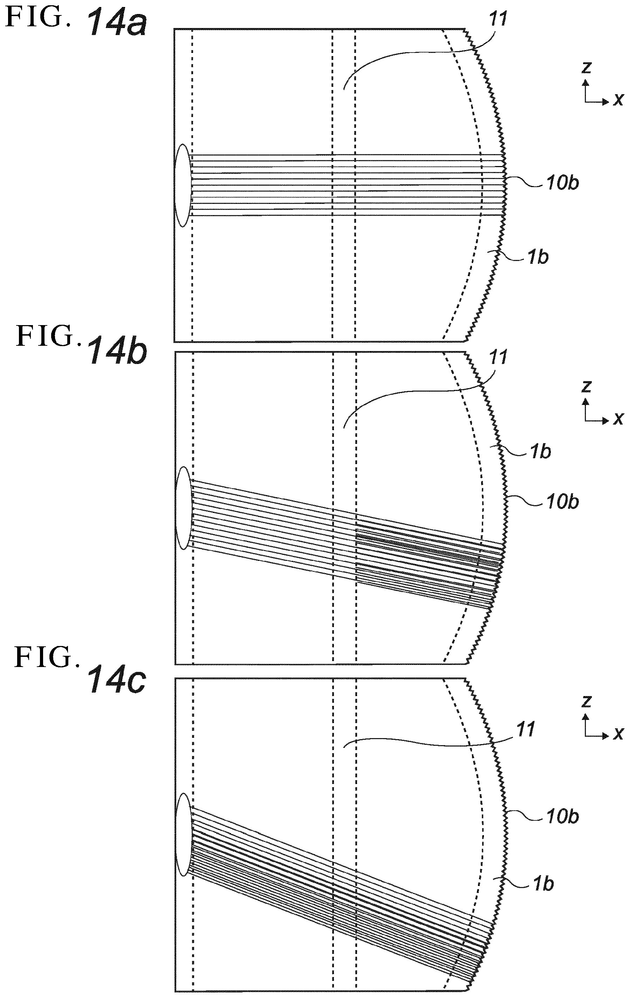

Les figures 14a, 14b et 14c illustrent schématiquement dans un plan zx, des exemples de propagation de faisceaux de lumière sous forme d'ondes planes dans un guide optique 1 illustré notamment aux figures 10, 12 et 13

La figure 15 est une illustration d'un agrandissement d'un système ou guide d'extraction de lumière agencé dans un guide optique 1 conforme à l'invention. Le guide d'extraction est avantageusement constitué d'une succession de miroirs semi-réfléchissants 11.

De manière évidente, l'invention ne se limite pas aux modes de réalisation préférentiels décrits précédemment et représentés sur les différentes figures, l'homme du métier pouvant y apporter de nombreuses modifications et imaginer d'autres variantes sans sortir ni de la portée, ni du cadre de l'invention définis par les revendications.

## Revendications

1. Guide optique (1) pour dispositif d'affichage près de l'œil comprenant :

   - un premier élément de guide (6) présentant une zone d'entrée pour y injecter un faisceau de lumière,
   - un second élément (7) de guide présentant une zone de sortie pour en extraire le faisceau lumineux, le premier élément de guide (6) étant superposé audit second élément de guide (7), et
   - un système de couplage optique entre le premier élément de guide (6) et le second élément de guide (7),
   - le premier et le second éléments (6, 7) de guide présentant sur une première partie de leur longueur, un espacement (9) mutuel de manière à délimiter une fine couche d'air entre lesdits éléments de guide (6, 7) s'étendant entre une première extrémité longitudinale des éléments de guide (6, 7) et le système de couplage optique étant d'une épaisseur suffisante pour éviter une pénétration de faisceaux de lumière réfléchis dans ledit espacement, **caractérisé en ce que** :
   - le système de couplage optique, localisé à une seconde extrémité longitudinale des premier et second éléments de guide (6, 7), comprend une portion (1b) monobloc desdits éléments de guide (6, 7), associée à un organe de réflexion (10) optique pour propager les faisceaux de lumière de la zone d'entrée vers la zone de sortie, l'organe optique de réflexion (10) étant un miroir cylindrique (10a) recouvrant la surface cylindrique d'extrémité de la portion (1b).

2. Guide optique (1) selon la revendication 1, **caractérisé en ce que** l'épaisseur e de l'espacement (9) entre les éléments de guide (6, 7) est comprise entre 0,1 mm et 0,2 mm.

3. Guide optique (1) selon la revendication 1 ou 2, **caractérisé en ce que** le premier élément de guide (6) présente la zone d'entrée à sa première extrémité longitudinale libre, sous forme d'une face inclinée (1a).

4. Guide optique (1) selon l'une quelconque des revendications 1 à 3, **caractérisé en ce que** la zone de sortie est pourvue d'un système d'extraction de lumière comportant au moins un miroir d'extraction (11).

5. Guide optique (1) selon l'une quelconque des revendications 1 à 4, **caractérisé en ce que** la zone de sortie est pourvue d'un système d'extraction de lumière comportant une succession de plusieurs miroirs d'extraction (11) semi-réfléchissants, constituant un guide d'extraction.

6. Guide optique (1) selon l'une quelconque des revendications 1 à 5, **caractérisé en ce que** le second élément de guide (7) présente une épaisseur e2 reliée à l'épaisseur e1 du premier élément de guide (6) avec la relation : e2 = e1 x (tan$\beta$ / tan$\alpha$), avec $\alpha$ et $\beta$ respectivement les incidences minimale et maximale des faisceaux de lumière injectés dans le premier élément de guide (6).

7. Guide optique (1) selon l'une quelconque des revendications 1 à 6, **caractérisé en ce que** le premier élément de guide (6) et le second élément du guide (7) présentent une longueur comprise entre 40 mm et 50 mm, la largeur desdits éléments de guide (6, 7) étant identique et comprise entre 35 mm et 45 mm.

8. Guide optique (1) selon l'une quelconque des revendications 1 à 7, **caractérisé en ce qu'**il présente une épaisseur e3 comprise entre 4 mm et 7 mm.

9. Guide optique (1) selon l'une quelconque des revendications 1 à 8, **caractérisé en ce que** les éléments de guide (6, 7) sont réalisés avec le même matériau constitutif, du genre PMMA.

10. **Système optique d'affichage près de l'œil comprenant :**

    - **un guide optique (1)** conforme à la revendication 1, et
    - **un système d'injection (3) de lumière pour**

**injecter la lumière dans ledit guide optique (1), le système d'injection (3)** comportant **un micro-affichage (4) pour fournir des sources ponctuelles de lumière, ledit système d'injection (3) permettant d'obtenir dans le guide (1) des faisceaux de lumière parallèles selon une direction donnée y et convergents dans un plan xz orthogonal à ladite direction y.**

11. Système optique d'affichage près de l'œil selon la revendication 10, **caractérisé en ce que** le système d'injection (3) comporte des organes optimisés pour focaliser, dans un plan zx, orthogonal au plan yx, chaque faisceau de lumière sur une surface focale courbe, laquelle se situe sensiblement à la distance focale du miroir cylindrique (10a).

12. Système optique selon la revendication 11, **caractérisé en ce que** le système d'injection de lumière (3) comprend deux lentilles (5a, 5b) présentant trois surfaces optiques de forme libre (S1, S2, S3) et un miroir plan (4a).

13. Système optique selon la revendication 11, **caractérisé en ce que** le système d'injection de lumière (3) comprend deux miroirs de forme libre (S9, S10) et une lentille (5d) présentant au moins une surface optique de forme libre ainsi qu'une lentille sphérique (5e).

14. Système optique selon la revendication 11, **caractérisé en ce que** le système d'injection de lumière (3) comprend un prisme de forme libre (3b) en une seule pièce présentant quatre surfaces optiques de forme libre (S5, S6, S7, S8) dont deux (S5, S8) travaillent en transmission, tandis que les deux autres (S7, S6) travaillent en réflexion et une lentille (5c) présentant une surface optique de forme libre (S4).

15. Casque ou lunettes de réalité virtuelle ou augmentée, **caractérisé en ce qu'**il ou elle(s) intègre(nt) un système optique conforme à l'une quelconque des revendications 10 à 14.

**Patentansprüche**

1. Lichtwellenleiter (1) für eine Anzeigevorrichtung in der Nähe des Auges, der Folgendes umfasst:

   - ein erstes Leiterelement (6) mit einem Eintrittsbereich, um einen Lichtstrahl in diesen zu injizieren,
   - ein zweites Leiterelement (7) mit einem Austrittsbereich, um den Lichtstrahl daraus zu extrahieren, wobei das erste Leiterelement (6) dem zweiten Leiterelement (7) überlagert ist, und
   - ein optisches Kopplungssystem zwischen dem ersten Leiterelement (6) und dem zweiten Leiterelement (7),
   - wobei das erste und das zweite Leiterelement (6, 7) über einen ersten Längenabschnitt einen gegenseitigen Abstand (9) aufweisen, um eine dünne Luftschicht zwischen den Leiterelementen (6, 7) zu begrenzen, die sich zwischen einem ersten Längsende der Leiterelemente (6, 7) erstreckt und das optische Kopplungssystem so dick ist, dass es verhindert, dass reflektierte Lichtstrahlen in den Abstand eindringen, **dadurch gekennzeichnet, dass**:

   - das optische Kopplungssystem, das sich an einem zweiten Längsende des ersten und zweiten Leiterelements (6, 7) befindet, einen einteiligen Abschnitt (1b) der Leiterelemente (6, 7) umfasst, der mit einem optischen Reflexionsorgan (10) verbunden ist, um die Lichtstrahlen von dem Eintrittsbereich zum Austrittsbereich weiterzuleiten, wobei das optische Reflexionsorgan (10) ein zylindrischer Spiegel (10a) ist, der die zylindrische Endfläche des Abschnitts (1b) bedeckt.

2. Lichtwellenleiter (1) nach Anspruch 1, **dadurch gekennzeichnet, dass** die Dicke des Abstands (9) zwischen den Leiterelementen (6, 7) zwischen 0,1 mm und 0,2 mm beträgt.

3. Lichtwellenleiter (1) nach Anspruch 1 oder 2, **dadurch gekennzeichnet, dass** das erste Leiterelement (6) den Eintrittsbereich an seinem ersten freien Längsende in Form einer geneigten Fläche (1a) aufweist.

4. Lichtwellenleiter (1) nach einem der Ansprüche 1 bis 3, **dadurch gekennzeichnet, dass** der Austrittsbereich mit einem Lichtextraktionssystem versehen ist, das mindestens einen Extraktionsspiegel (11) umfasst.

5. Lichtwellenleiter (1) nach einem der Ansprüche 1 bis 4, **dadurch gekennzeichnet, dass** der Austrittsbereich mit einem Lichtextraktionssystem versehen ist, das eine Folge von mehreren teilreflektierenden Extraktionsspiegeln (11) umfasst, die eine Extraktionsleitung bilden.

6. Lichtwellenleiter (1) nach einem der Ansprüche 1 bis 5, **dadurch gekennzeichnet, dass** das zweite Leiterelement (7) eine Dicke e2 aufweist, die mit der Dicke e1 des ersten Leiterelements (6) im Verhältnis: e2 = e1 (tan$\beta$ / tan$\alpha$) verbunden ist, wobei $\alpha$ und $\beta$ jeweils der minimale und maximale Einfallswinkel der in das erste Leiterelement (6) injizierten Lichtstrahlen sind.

7. Lichtwellenleiter (1) nach einem der Ansprüche 1 bis 6, **dadurch gekennzeichnet, dass** das erste Leiterelement (6) und das zweite Leiterelement (7) eine Länge zwischen 40 mm und 50 mm aufweisen, wobei die Breite der Leiterelemente (6, 7) identisch ist und zwischen 35 mm und 45 mm liegt.

8. Lichtwellenleiter (1) nach einem der Ansprüche 1 bis 7, **dadurch gekennzeichnet, dass** er eine Dicke e3 zwischen 4 mm und 7 mm aufweist.

9. Lichtwellenleiter (1) nach einem der Ansprüche 1 bis 8, **dadurch gekennzeichnet, dass** die Leiterelemente (6, 7) aus demselben Material, der Art wie PMMA, bestehen.

10. Optisches System zur Anzeige in Augennähe, das folgendes umfasst:

   - einen Lichtwellenleiter (1) nach Anspruch 1 und 2, und
   - ein Lichtinjektionssystem (3) zum Injizieren von Licht in den Lichtwellenleiter (1), wobei das Injektionssystem (3) eine Mikroanzeige (4) zum Bereitstellen von Punktlichtquellen umfasst und man durch das Injektionssystem (3) in dem Leiter (1) Lichtstrahlen erhält, die in einer gegebenen Richtung y parallel sind und in einer xz-Ebene orthogonal zu der Richtung y konvergieren.

11. Optisches System zur augennahen Anzeige nach Anspruch 10, **dadurch gekennzeichnet, dass** das Injektionssystem (3) Organe umfasst, die optimiert sind, um in einer zx-Ebene, orthogonal zur yx-Ebene, jeden Lichtstrahl auf eine gebogene Brennfläche zu fokussieren, die im Wesentlichen in der Fokusweite des Zylinderspiegels (10a) liegt.

12. Optisches System nach Anspruch 11, **dadurch gekennzeichnet, dass** das Lichtinjektionssystem (3) zwei Linsen (5a, 5b) mit drei frei geformten optischen Oberflächen (S1, S2, S3) und einen Planspiegel (4a) umfasst.

13. Optisches System nach Anspruch 11, **dadurch gekennzeichnet, dass** das Lichtinjektionssystem (3) zwei Freiformspiegel (S9, S10) und eine Linse (5d) mit mindestens einer optischen Freiformfläche sowie eine sphärische Linse (5e) umfasst.

14. Optisches System nach Anspruch 11, **dadurch gekennzeichnet, dass** das Lichtinjektionssystem (3) ein einteiliges Freiformprisma (3b) mit vier optischen Freiformflächen (S5, S6, S7, S8), von denen zwei (S5, S8) in der Übertragung und die anderen beiden (S7, S6) in Reflexion arbeiten, und eine Linse (5c) mit einer optischen Freiformfläche (S4) umfasst.

15. Helm oder Brille für virtuelle oder erweiterte Realität, **dadurch gekennzeichnet, dass** in diesem, dieser oder diesen ein optisches System gemäß einem der Ansprüche 10 bis 14 integriert ist.

## Claims

1. An optical guide (1) for a near-eye display device comprising:

   - a first guide element (6) having an inlet zone to inject a beam of light therein,
   - a second guide element (7) having an outlet zone to extract the beam of light therefrom, the first guide element (6) being superimposed on said second guide element (7), and
   - an optical coupling system between the first guide element (6) and the second guide element (7),
   - the first and second guide elements (6, 7) having, over a first part of their length, a mutual spacing (9) so as to delimit a thin layer of air between said guide elements (6, 7) extending between a first longitudinal end of the guide elements (6, 7) and the optical coupling system being of sufficient thickness to prevent the reflected beams of light to enter into said spacing, **characterised in that**:

   - the optical coupling system, located at a second longitudinal end of the first and second guide elements (6, 7), comprises a one-piece portion (1b) of said guide elements (6, 7), associated with an optical reflection element (10) for propagating the beams of light from the inlet zone to the outlet zone, the optical reflection element (10) being a cylindrical mirror (10a) covering the cylindrical end surface of the portion (1b).

2. The optical guide (1) according to claim 1, **characterised in that** the thickness e of the spacing (9) between the guide elements (6, 7) is of between 0.1 mm and 0.2 mm.

3. The optical guide (1) according to claim 1 or 2, **characterised in that** the first guide element (6) has the inlet zone at its first free longitudinal end, as an inclined face (1a).

4. The optical guide (1) according to any one of claims 1 to 3, **characterised in that** the outlet zone is provided with a light extraction system comprising at least one extraction mirror (11).

5. The optical guide (1) according to any one of claims 1 to 4, **characterised in that** the outlet zone is provided with a light extraction system comprising a succession of several semi-reflective extraction mirrors (11), constituting an extraction guide.

6. The optical guide (1) according to any one of claims 1 to 5, **characterised in that** the second guide element (7) has a thickness e2 related to the thickness e1 of the first guide element (6) with the relation: $e2 = e1 \times (\tan\beta / \tan\alpha)$, with $\alpha$ and $\beta$ respectively the minimum and maximum incidences of the beams of light injected into the first guide element (6).

7. The optical guide (1) according to any one of claims 1 to 6, **characterised in that** the first guide element (6) and the second guide element (7) have a length of between 40 mm and 50 mm, the width of said guide elements (6, 7) being identical and of between 35 mm and 45 mm.

8. The optical guide (1) according to any one of claims 1 to 7, **characterised in that** it has a thickness e3 of between 4 mm and 7 mm.

9. An optical guide (1) according to any one of claims 1 to 8, **characterised in that** the guide elements (6, 7) are made of the same constituent material, of the PMMA type.

10. An optical near-eye display system comprising:

> - an optical guide (1) according to claim 1, and
> - a light injection system (3) for injecting light into said optical guide (1), the injection system (3) comprising a micro-display (4) for providing point light sources, said injection system (3) making it possible to obtain, in the guide (1), beams of light that are parallel along a given direction y and convergent in a plane xz orthogonal to said direction y.

11. The near-eye optical display system according to claim 10, **characterised in that** the injection system (3) comprises members optimised for focusing, in a plane zx, orthogonal to the plane yx, each beam of light on a curved focal surface, which is located substantially at the focal distance of the cylindrical mirror (10a).

12. The optical system according to claim 11, **characterised in that** the light injection system (3) comprises two lenses (5a, 5b) having three free-form optical surfaces (S1, S2, S3) and a planar mirror (4a).

13. The optical system according to claim 11, **characterised in that** the light injection system (3) comprises two free-form mirrors (S9, S10) and a lens (5d) having at least one free-form optical surface as well as a spherical lens (5e).

14. The optical system according to claim 11, **characterised in that** the light injection system (3) comprises a one-piece free-form prism (3b) having four free-form optical surfaces (S5, S6, S7, S8), two of which (S5, S8) work in transmission, while the other two (S7, S6) work in reflection, and a lens (5c) having a free-form optical surface (S4).

15. Virtual or augmented reality headphones or glasses, **characterized in that** they integrate an optical system according to any one of claims 10 to 14.

FIG.1

FIG.2a

FIG.2b

## FIG.3

## FIG.6

FIG.1a

FIG.1b

FIG.4b

FIG.4c

FIG.4a

FIG.5a

FIG.5b

FIG.5c

FIG.7

FIG.8

FIG.9

FIG.12

FIG.13

18

## FIG.10

## FIG.11

## FIG.15

FIG. *14a*

FIG. *14b*

FIG. *14c*

## RÉFÉRENCES CITÉES DANS LA DESCRIPTION

**Documents brevets cités dans la description**

- US 20120212400 A1
- FR 2941786 A1
- FR 2983976
- US 2014140653 A1
- JP 2004158336 A